# EUROPÄISCHE PATENTSCHRIFT

(11) **EP 2 758 149 B1**
(45) Veröffentlichungstag und Bekanntmachung des Hinweises auf die Patenterteilung: **06.03.2019**
(21) Anmeldenummer: 12751271.3
(22) Anmeldetag: 28.08.2012
(51) Int. Cl.: B01D 39/20

(54) **FILTERMATERIAL**
FILTER MATERIAL
MATÉRIAU FILTRANT

(30) Priorität: 22.09.2011 DE 102011114400
(43) Veröffentlichungstag der Anmeldung: 30.07.2014
(73) Patentinhaber: Hydac Filtertechnik GmbH, 66280 Sulzbach/Saar (DE)
(72) Erfinder: KOCH, Edwin, 66636 Tholey (DE); SCHWENDER, Matthias, 66459 Kirkel (DE); SCHMITZ, Andreas, 66459 Kirkel (DE); JOCHUM, Stefan, 66557 Hüttigweiler (DE)
(74) Vertreter: Bartels und Partner, Patentanwälte
(86) Internationale Anmeldenummer: PCT/EP2012/003604
(87) Internationale Veröffentlichungsnummer: WO 2013/041178

(56) Entgegenhaltungen:
- EP-A1- 1 369 160
- WO-A1-91/16119
- US-A- 4 495 030
- US-A1- 2011 005 990

## Beschreibung

Die Erfindung betrifft ein Filtermaterial, insbesondere für hydraulische Filter, wie Ölfilter, bestehend aus mindestens einer Einzellage eines Verbundes von Glasfasern mit Kohlenstoff-Fasern. Die Erfindung betrifft darüber hinaus ein Filterelement mit einem dahingehenden Filtermaterial.

Filtermaterialien werden in einer Vielzahl von Ausführungsformen zum Abscheiden von Staubpartikeln aus einem mit Staubpartikeln beladenen Gasstrom oder auch zum Abscheiden von sonstigen Feststoff-Partikeln aus flüssigen Medienströmen verwendet. Die abzuscheidenden Partikel-Verschmutzungen stören industrielle Prozesse und beschleunigen den Verschleiß von Maschinen und Anlagen. Ferner können sie Gesundheit und Wohlbefinden beeinträchtigen.

Dahingehende Filtermaterialien werden in verschiedenartig gestalteten Filterelementen zur Bildung eines meist vielschichtigen Filtermediums angewandt. Die dahingehenden Filtermaterialien haben nicht nur die Funktion der Abscheidung von Partikeln in strömungsfähigen Medien, sondern auch die Funktion, insbesondere elektrische Potentiale aus den Medien abzuleiten. Bei Durchströmen des Filtermaterials eines Filters hat es sich gezeigt, dass es zu Potentialunterschieden und mithin zu elektrostatischen Aufladungen kommen kann. Dies kann beispielsweise zu einer erhöhten Ölalterung bei Hydrauliköl führen. Gegebenenfalls können ungewollte Entladungen auch das Filtermaterial schädigen. Um dem entgegenzuwirken, kann die Größe der entstehenden Ladung und der Potentialaufbau zwischen dem Filtermaterial und dem Medium durch einen geeigneten Aufbau des Filters und durch eine geeignete Materialwahl gezielt beeinflusst werden.

Die DE 102 008 004 344 A1 schlägt verschiedene konstruktive Maßnahmen vor, um im Betrieb eines Filterelements das Entstehen von schädigenden Potentialunterschieden und Ladungen zu vermeiden. Als eine konstruktive Maßnahme wird vorgeschlagen, in einen Filter ein Filtermedium zum Reinigen von strömungsfähigem Medium zu verwenden, dessen Potentialunterschied zu dem zu reinigenden Medium gering ist. Hierdurch ist sichergestellt, dass keine große elektrostatische Aufladung generiert wird. Eine weitere konstruktive Maßnahme, die die Druckschrift vorschlägt, ist, Teile des Filtermediums so zu gestalten, dass diese zueinander und/oder zu dem zu reinigenden Fluid derart unterschiedliche Potentiale aufweisen, dass diese sich gegenseitig zumindest teilweise aufheben. Eine weitere konstruktive Maßnahme zur Vermeidung von schädigenden Potentialunterschieden in einem Filter gemäß der Druckschrift ist, dass für die gezielte Ableitung elektrischer Ladungen in dem Filter entlang eines vorgebbaren Weges zumindest teilweise ableitfähige Materialien eingesetzt werden.

Eine derartige Filterlösung führt elektrische Ladungen zeitlich langsamer weg als ein leitfähiges Filter, wodurch im Betrieb des Filters ein dahingehendes Medium nicht hoch aufgeladen wird. Es baut sich keine Feldstärke in dem Filter auf, die zu einer Entladung mit einer schädigenden Wirkung auf das Filter und das Medium führen kann. Eine weitere konstruktive Maßnahme, um im Betrieb eines Filterelements das Entstehen von schädigenden Potentialunterschieden zu vermeiden, offenbart die Druckschrift dahingehend, dass eine Ladungsausgleichslage, die dem Filtermedium nachgeschaltet ist, angewandt wird. Diese Ladungsausgleichslage, die auch durch eine Beschichtung auf dem Filtermedium gebildet sein kann, reduziert die Aufladung des Mediums und des Filtermediums und verhindert so Entladungen in dem Filter.

Die WO 03/033100 A1 beschreibt ein Filterelement für Flüssigkeiten, insbesondere für Hydraulik-Flüssigkeiten, mit einem Filtermaterial und mit einer das Filtermaterial bezogen auf die Durchströmrichtung des Filterelements zumindest reinseitig abstützenden gitterförmigen Stützstruktur, wobei die Stützstruktur aus einem Kunststoffmaterial gefertigt ist und elektrisch leitfähige Elemente zur Ableitung elektrischer Potentiale aus der zu filtrierenden Flüssigkeit aufweist. Die elektrisch leitfähigen Elemente in der Stützstruktur bestehen aus Metallfäden, die in Abhängigkeit von den chemischen Eigenschaften des zu filtrierenden Fluides besonders bevorzugt aus rostfreiem Stahl gebildet sind.

Die US 5,527,569 beschreibt ein elektrisch leitfähiges Filtermaterial aus einer porösen Membranstruktur aus Polytetrafluorethylen. Die Membranstruktur beinhaltet elektrisch leitfähige Partikel. Die elektrisch leitfähigen Partikel sind in der Lage, eine elektrische Ableitstrecke zur Ableitung von elektrostatischen Ladungen in dem Filtermaterial zu bewirken. Die elektrisch leitfähigen Partikel können beispielsweise aus einem Metall oder aus Kohlenstoff gebildet sein.

Die US 4,606,968 beschreibt ein textiles Verbund-Filtermaterial in der Art eines Gewebes mit Kett- und Schussfäden, in welches elektrisch leitfähige Fäden eingewoben sind. Die elektrisch leitfähigen Fäden können beispielsweise aus Kohlefasern gebildet sein.

Die EP 1 369 160 A1 offenbart ein Filtermaterial, insbesondere für hydraulische Filter, wie Ölfilter, bestehend aus mindestens einer Einzellage eines Verbundes von Glasfasern mit Kohlenstoff-Fasern ohne weitere Zusätze. Die bekannten Filtermaterialien, welche in der Lage sind, elektrostatische Aufladungen in dem jeweils zu filtrierenden Medium zu vermeiden bzw. elektrostatische Ladungen aus dem Medium abzuleiten, sind in Bezug auf ihr zugrunde liegendes Fertigungsverfahren und die Fertigungskosten verbesserungswürdig.

Ausgehend von diesem Stand der Technik liegt der Erfindung die Aufgabe zugrunde, ein Filtermaterial, insbesondere für hydraulische Filter, wie Ölfilter, bereitzustellen, das kostengünstig zu fertigen ist, dessen Filterfeinheit und dessen elektrische Leitfähigkeit auf einfache Weise definierbar ist und das eine hohe Standzeit aufweist. Der Erfindung liegt ferner die Aufgabe zugrunde, ein Filterelement bestehend aus einem dahingehenden Filtermaterial zu schaffen.

Diese Aufgaben werden mit einem Filtermaterial mit der Gesamtheit der Merkmale des Patentanspruchs 1 und mit einem Filterelement gemäß einem nebengeordneten Patentanspruch gelöst.

Gemäß dem Kennzeichen von Anspruch 1 ist vorgesehen, dass das Filtermaterial (1) aus etwa 70 % bis 90 % Borosilikatglasfasern (7), 3 % bis 20 % Kunststoff-Schmelzfasern (13), 3 % bis 20 % Zusatzstoffen (15) in der Art von Bindern, wie Acrylatharz, Epoxidharz oder einem polymerisierenden Elastomer und etwa 5 % bis 30 % Kohlenstoff-Fasern (9) gebildet ist.

Das erfindungsgemäße Filtermaterial besteht aus mindestens einer Einzellage eines Verbundes von Glasfasern mit Kohlenstoff-Fasern. Die Anwendung von ausschließlich Fasern - Glasfasern, Kohlenstoff-Fasern - zur Herstellung mindestens einer Einzellage des Filtermaterials ermöglicht für beide Faserarten gleiche Verarbeitungswerkzeuge und Verfahrensschritte, im Gegensatz zu den bekannten Filtermaterialien, in denen entweder die relevanten Grundwerkstoffe für das jeweilige Filtermaterial in verschiedener Ausgestaltung vorliegen oder die relevanten Grundwerkstoffe einander gegenübergestellt, unterschiedliche physikalische Eigenschaften aufweisen (Metallfaden, Textilfaden). Zudem sind Glasfasern und Kohlenstoff-Fasern gegen viele Fluide von ihrem Verhalten her inert.

Glasfasern und Kohlenstoff-Fasern lassen sich hierbei in besonders einfacher Weise in der Art einer "chaotischen Vlies- oder Matrixanordnung" miteinander verbinden. Dadurch ist das Filtermaterial kostengünstig zu fertigen und dessen Filterfeinheit und dessen elektrische Leitfähigkeit ist auf einfache Weise definierbar.

Es hat sich überraschend gezeigt, dass zur wirksamen Ableitung von elektrostatischen Ladungen aus dem zu filtrierenden Medium der Anteil an Kohlenstoff-Fasern in dem Verbund geringer als der Anteil an Glasfasern sein kann. Eine wirksame Ableitung von elektrostatischen Ladungen ist auch bei einem Kohlenstoff-Faseranteil in dem Verbund von nur etwa 10 % noch ohne Weiteres möglich. Die Glasfasern sind in dem kostengünstigen Ausführungsbeispiel des Filtermaterials gemäß der Erfindung aus einem mineralischen Glas, wie Borosilikatglas (70 bis 80 % SiO; 7 bis 13 % B₂O₂; 4 bis 8 % Na₂O, K₂O; 2 bis 7 % Al₂O₃), gebildet. Die Glasfasern und/oder Kohlenstoff-Fasern können in dem Verbund chaotisch oder strukturiert in Form einer Matrix oder eines Vlieses angeordnet sein. Das Filtermaterial kann auch insoweit bevorzugt ein Spinn-Vliesstoff sein, d.h. als sog. Spunbond ausgebildet werden, bei dem der Spinn-Vliesstoff durch eine Wirrablage von schmelzgesponnenen Filamenten auf eine matrixartige Grundstruktur erzeugt wird. Die Filamente wiederum sind bevorzugt aus endlosen Synthesefasern aus schmelzspinnbaren Polymermaterialien gebildet. Zur Herstellung eines derartigen Filtermaterials eignet sich für die Grundstruktur besonders bevorzugt Polyethylen, Polyamid oder Polypropylen.

Der Verbund aus Glasfasern und Kohlenstoff-Fasern wird zumindest teilweise durch Zusatzstoffe in der Art von Bindern, wie Acrylatharz, Epoxydharz oder einem polymerisierten Elastomer gebildet, insbesondere wenn die Glasfasern und Kohlenstoff-Fasern als Vlies oder Matte mit chaotischer Lage der Fasern zueinander ausgelegt sind. Der Binder kann hierbei die Kontaktpunkte der Fasern miteinander verbinden, wobei der Binder das gewünschte freie Porenvolumen des Filtermaterials nicht nachteilig beeinflusst. Die Auswahl des jeweiligen Binders erfolgt insbesondere unter Berücksichtigung der chemischen Stoffeigenschaften des zu filtrierenden Fluids, das zum einen die mit dem Binder realisierten Kontaktstellen nicht auflösen soll und zum anderen soll der Binder das Fluid nicht chemisch in nachteiliger Weise beeinflussen.

Für vielseitige Einsatzzwecke in der Hydraulik und Pneumatik hat es sich gezeigt, dass es besonders vorteilhaft ist, das Filtermaterial aus etwa 80 % Borosilikatglasfasern, aus etwa 5 % Kunststoff-Schmelzfasern, aus etwa 5 % Zusatzstoffen (Binder) und aus etwa 10 % Kohlenstoff-Fasern zu bilden. In einem Filter lässt sich das erfindungsgemäße Filtermaterial vorzugsweise in flächiger Anlage an zumindest einer weiteren Funktionsschicht, wie etwa an einer Stützlage oder einer Vorfilterschicht, verwenden. Das erfindungsgemäße Filtermaterial eignet sich für die Verwendung in Filterelementen mannigfacher Gestalt. In einem dahingehenden Filterelement kann das erfindungsgemäße Filtermaterial in einer Abfolge von Einzellagen, wie folgt:
- Stützgitter
- Vliesmaterial
- großporiges Fasermaterial
- feinporiges Fasermaterial
- Vliesmaterial
- Stützgitter
angewandt werden. Es versteht sich, dass jedwede andere Abfolge an Einzellagen, insbesondere die Anordnung des erfindungsgemäßen Filtermaterials an der Peripherie eines Filterelements Vorteile in Bezug auf die Ableitung von elektrostatischen Ladungen haben kann. Aufgrund der insgesamt geringen Anteile an Kohlenstoff-Fasern, die ausreichend sind, um elektrostatische Ladungen in einer Vielzahl bekannter Medien abzuleiten, sind auch die Materialkosten des erfindungsgemäßen Filtermaterials vergleichsweise gering.

Nachfolgend werden das erfindungsgemäße Filtermaterial und ein mit diesem versehenes Filterelement anhand eines Ausführungsbeispiels nach der Zeichnung näher erläutert. Dabei zeigen in prinzipieller und nicht maßstäblicher Darstellung die
- Fig. 1: in der Art einer Rasterelektronen-Mikroskopieaufnahme einen Teilausschnitt aus dem erfindungsgemäßen Filtermaterial; und
- Fig. 2: in der Art einer teilweise aufgeschnittenen, perspektivischen Darstellung ein Filterelement mit einem erfindungsgemäßen Filtermaterial.

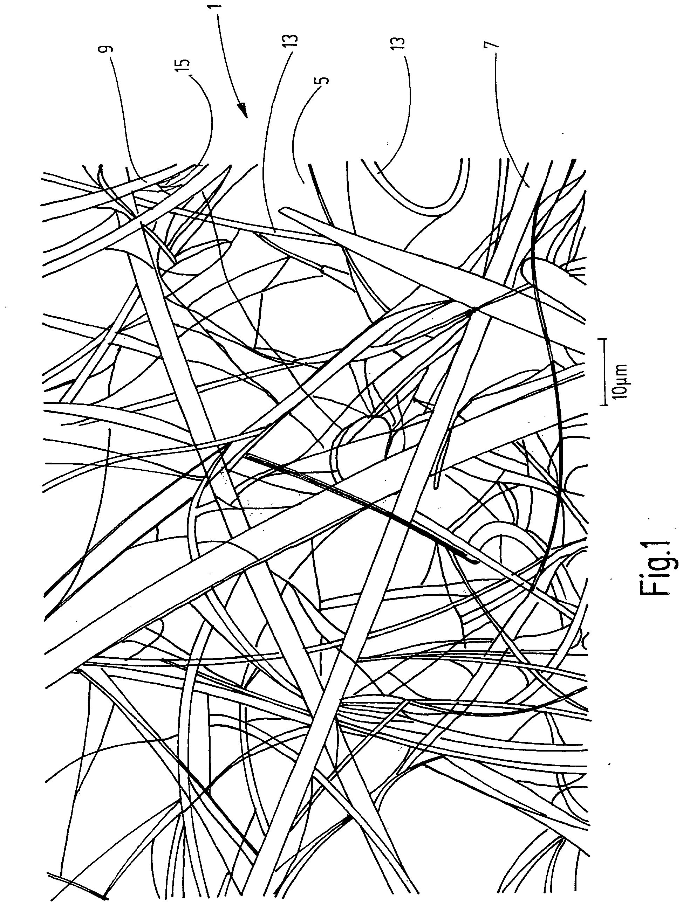

In Fig. 1 ist in der Art einer Rasterelektronen-Mikroskopieaufnahme die Struktur eines Filtermaterials 1, das zur Verwendung für ein hydraulisches Filter 3, wie beispielsweise für ein Filter einer hydraulischen Anlage einer Baumaschine angewandt wird, gezeigt. Es ist eine Einzellage 5 des Filtermaterials 1, aufgrund der Rasterelektronen-Mikroskopieaufnahme, in der Art einer räumlichen Ansicht des Filtermaterials 1 dargestellt. Die Einzellage 5 besteht im Wesentlichen aus einem Verbund von chaotisch übereinandergelegten Glasfasern 7 und Kohlenstoff-Fasern 9. Die Glasfasern 7 und die Kohlenstoff-Fasern 9 sind sowohl in Bezug auf ihren Längsachsenverlauf in parallelen Ebenen zueinander, als auch in, zu der Bildebene in Fig. 1, winkeligem Verlauf angeordnet. Der Anteil an Kohlenstoff-Fasern 9 in dem Verbund ist dabei geringer als der Anteil an Glasfasern 7. Der Kohlenstoff-Faseranteil in dem gezeigten Verbund beträgt etwa 10 % des Glasfaseranteils. Die Glasfasern 7 sind aus einem mineralischen Glas, aus Borosilikatglas, gebildet. Der Verbund weist ferner zusätzliche Anteile an Schmelzfasern 13 aus Kunststoff auf, insbesondere aus Polyethylen, Polyamid und Polypropylen. Die Schmelzfasern 13 sind, wie gezeigt, insbesondere als Bindeglieder zwischen den Glasfasern 7 und Kohlenstoff-Fasern 9 in dem Filtermaterial 1 eingesetzt. Zu diesem Zweck sind die Schmelzfasern 13 so angeordnet, dass sie die Glasfasern 7 und die Kohlenstoff-Fasern 9 an jeweils mehreren Stellen umschlingen oder umfassen und, sich über einen Tiefenbereich des Filtermaterials 1 erstreckend, Bindeglieder in jeder Raumrichtung des Filtermaterials 1 bilden.

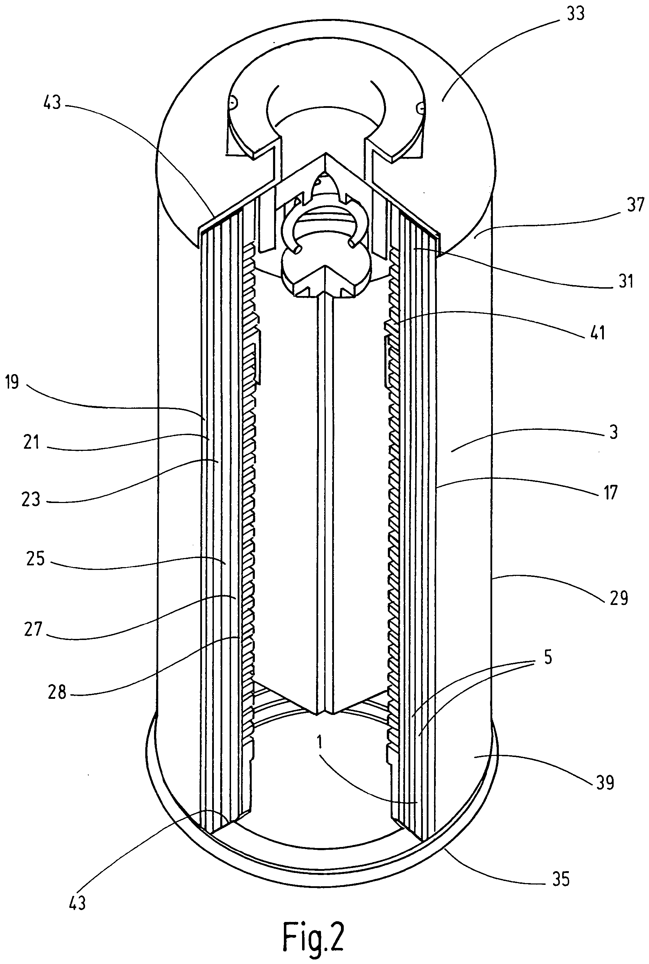

Die Verbindung der Schmelzfasern 13 mit den Glasfasern 7 und den Kohlenstoff-Fasern 9 wird durch Zusatzstoffe 15, wie flüssiges und auspolymerisierendes Acrylatharz oder Epoxidharz oder auch ein geeigneter polymerisierender Elastomer, die in die chaotische Matrix während oder nach deren Herstellung gegeben werden, in Bezug auf deren Festigkeit, insbesondere deren Reißfestigkeit, verbessert. Das in Fig. 1 gezeigte Filtermaterial 1 weist einen Gehalt an Borosilikatglasfasern 7 von etwa 80 %, einen Gehalt von Kunststoffschmelzfasern 13 von etwa 5 %, einen Gehalt an Zusatzstoffen 15 von etwa 5 % und einen Gehalt von Kohlenstoff-Fasern 9 von etwa 10 % auf. Aufgrund der Ausrichtung der Kohlenstoff-Fasern 9 in dem Filtermaterial 1 sowohl in nahezu parallelen Ebenen übereinander als auch in Verbindung der Ebenen ermöglicht es, dass beim Durchströmen des Filtermaterials 1 mit Medium vorzugsweise keine Ladungstrennung, also auch keine elektrostatischen Potentiale entstehen. Sofern das, das Filtermaterial 1 anströmende Medium bereits Potentialunterschiede aufweist, sind die Kohlenstoff-Fasern 9 in der Lage, aufgrund ihrer räumlichen Anordnung in dem Filtermaterial 1 eine kontinuierliche Ableitstrecke, insbesondere eine Mehrzahl an Ableitstrecken für elektrostatische Ladungen zu bilden. Die dahingehenden elektrostatischen Ladungen werden, sofern das Filtermaterial 1 in einem lediglich beispielhaft in Fig. 2 gezeigten Filter 3 eingesetzt wird, vorzugsweise über Ableitelemente an eine Masse in der Peripherie des Filters 3 abgeleitet.

Das in Fig. 1 gezeigte Filtermaterial 1 ist in einem derartigen Filter 3 vorzugsweise in flächiger Anlage an zumindest einer weiteren Funktionsschicht 17 des Filters 3 gehalten. Die Funktionsschicht 17 kann ein Stützgitter 19 oder auch ein Vliesmaterial 21 sein. Obwohl die genannten Zusatzstoffe 15 eine bedeutende Verbesserung der Faserverankerung des Verbundes aus Glasfasern 7 und Kohlenstoff-Fasern 9 bewirken, verbunden mit einer hohen Flexibilität und mechanischen Beanspruchbarkeit des Filtermaterials, ist es zur Verbesserung der Handhabbarkeit des Filtermaterials sinnvoll und vorteilhaft, dahingehende Stützgitter und Vliesmaterialien in einem Verbund in der Art eines Filterelements 29 mit dem Filtermaterial 1 anzuwenden.

Das in Fig. 2 gezeigte Filter 3 ist in der Art eines sogenannten Filterelementes 29 aufgebaut und weist ein Filtermedium 31 auf, das sich zwischen zwei Endkappen 33, 35 erstreckt. Die Endkappen 33, 35 sind jeweils mit einem zuordenbaren Endbereich 37, 39 des Filtermediums 31 verbunden. Das Filtermedium 31 stützt sich innenumfangsseitig an einem fluiddurchlässigen Stützrohr 41 ab. Das Filtermedium 31 ist ferner an den genannten Endbereichen 37 und 39 über eine Klebstoffschicht 43 mit den Endkappen 33, 35 verbunden.

Zum Abreinigen tritt das Medium von außen nach innen durch das Filtermedium 31, wobei das Filtermedium 31 der einfacheren Darstellung wegen in der Art eines zylindrischen Filtermattenteils dargestellt ist. Vorteilhaft kann das Filtermedium 31 auch plissiert ausgebildet sein und in Form von Filterfalten um das Stützrohr 41 angeordnet sein. Das Filtermedium 31 ist mehrlagig aufgebaut, wobei der Mehrlagenaufbau insbesondere ein äußeres Stützgitter 19 aufweist und zur Stabilisierung des weiteren Lagenaufbaus dient. Vergleichbar hierzu kann ein weiteres, inneres Stützgitter 28 vorhanden sein. An die jeweiligen Stützgitter 19, 28 schließt sich jeweils ein Vliesmaterial 21, 27 an. Insoweit ist der Aufbau des Filtermediums 31 über seine Tiefe betrachtet zunächst symmetrisch. An das Vliesmaterial 21 schließt sich eine Einzellage 5 eines großporigen Fasermaterials 23 aus Glasfasern 7 und Kohlenstoff-Fasern 9 an. In Anlage an die dahingehende Einzellage ist eine weitere Einzellage 5 eines feinporigen Fasermaterials 25 aus Glasfasern 7 und Kohlenstoff-Fasern 9. Die beiden Einzellagen 23, 25 sind prinzipiell wie in Fig. 1 gezeigt aufgebaut und insbesondere deren Kohlenstoff-Fasern 9 sind leitend über nicht näher dargestellte Ableitelemente in den Endkappen 33, 35 mit zumindest einem Flächenbereich der Außenfläche des Filterelements 29 verbunden. Auf diese Weise lassen sich elektrostatische Ladungen von dem Filterelement 29 an Masse bildende Teile der Peripherie des Filterelements 29 wie beispielsweise einer hydraulischen Anlage ableiten. Der grundsätzliche Aufbau eines dahingehenden Filterelements 29 ist in einer Voranmeldung der Anmelderin (DE 10 2008 004 344 A1) näher beschrieben, so dass an dieser Stelle auf die Beschreibung weiterer dargestellter Bauelemente und Funktionen des Filterelements 29 verzichtet wird.

## Patentansprüche

1. Filtermaterial, insbesondere für hydraulische Filter (3), wie Ölfilter, bestehend aus mindestens einer Einzellage (5) eines Verbundes von Glasfasern (7) mit Kohlenstoff-Fasern (9), **dadurch gekennzeichnet, dass** das Filtermaterial (1) aus etwa 70 % bis 90 % Borosilikatglasfasern (7), 3 % bis 20 % Kunststoff-Schmelzfasern (13), 3 % bis 20 % Zusatzstoffen (15) in der Art von Bindern, wie Acrylatharz, Epoxidharz oder einem polymerisierenden Elastomer und etwa 5 % bis 30 % Kohlenstoff-Fasern (9) gebildet ist.

2. Filtermaterial nach Anspruch 1, **dadurch gekennzeichnet, dass** die Glasfasern (7) und/oder die Kohlenstoff-Fasern (9) in dem Verbund chaotisch oder strukturiert in Form einer Matrix oder eines Vlieses vorliegen.

3. Filtermaterial nach einem der vorhergehenden Ansprüche, **dadurch gekennzeichnet, dass** die Kunststoff-Schmelzfasern (13) aus Polyethylen, Polyamid oder Polypropylen gebildet sind.

4. Filtermaterial nach einem der vorhergehenden Ansprüche, **dadurch gekennzeichnet, dass** das Filtermaterial (1) aus etwa 80% Borosilikatglasfasern (7), etwa 5 % Kunststoff-Schmelzfasern (13), etwa 5 % Zusatzstoffen (15) und etwa 10 % Kohlenstoff-Fasern (9) gebildet ist.

5. Filtermaterial nach einem der vorhergehenden Ansprüche, **dadurch gekennzeichnet, dass** das Filtermaterial (1) in flächiger Anlage an zumindest einer weiteren Funktionsschicht (17) eines Filters (3) ist.

6. Filtermaterial nach Anspruch 5, **dadurch gekennzeichnet, dass** die Funktionsschicht (17) ein Stützgitter (19, 28) ist.

7. Filterelement, **dadurch gekennzeichnet, dass** es ein Filtermaterial (1) nach einem der vorhergehenden Ansprüche beinhaltet.

8. Filterelement nach Anspruch 7, **dadurch gekennzeichnet, dass** das Filterelement (29) zumindest die nachfolgende Abfolge an Einzellagen (5) aufweist:
- Stützgitter (19)
- Vliesmaterial (21)
- großporiges Fasermaterial (23)
- feinporiges Fasermaterial (25)
- Vliesmaterial (27)
- Stützgitter (28).

## Claims

1. A filter material, in particular for hydraulic filters (3), such as oil filters, consisting of at least one individual layer (5) of a composite of glass fibres (7) with carbon fibres (9), **characterised in that** the filter material (1) is formed from approximately 70% to 90% borosilicate glass fibres (7), 3% to 20% plastic melt fibres (13), 3% to 20% additives (15) such as binders like acrylic resin, epoxy resin or a polymerising elastomer, and approximately 5% to 30% carbon fibres (9).

2. The filter material according to claim 1, **characterised in that** the glass fibres (7) and/or the carbon fibres (9) are present in the composite in chaotic manner or structured in the form of a matrix or a non-woven fabric.

3. The filter material according to one of the preceding claims, **characterised in that** the plastic melt fibres (13) are formed from polyethylene, polyamide or polypropylene.

4. The filter material according to one of the preceding claims, **characterised in that** the filter material (1) is formed from approximately 80% borosilicate glass fibres (7), approximately 5% plastic melt fibres (13), approximately 5% additives (15) and approximately 10% carbon fibres (9).

5. The filter material according to one of the preceding claims, **characterised in that** the filter material (1) is in planar contact with at least one further functional layer (17) of a filter (3).

6. The filter material according to claim 5, **characterised in that** the functional layer (17) is a support grid (19, 28).

7. A filter element, **characterised in that** it contains a filter material (1) according to one of the preceding claims.

8. The filter element according to claim 7, **characterised in that** the filter element (29) has at least the following sequence of individual layers (5):
- Support grid (19)
- Non-woven material (21)
- Large-pore fibre material (23)
- Fine-pore fibre material (25)
- Non-woven material (27)
- Support grid (28).

## Revendications

1. Matière filtrante, notamment pour des filtres (3) hydrauliques, comme des filtres à huile, constituée d'au moins une couche (5) individuelle d'un composite de fibres (7) de verre avec des fibres (9) de carbone, **caractérisée en ce que** la matière (1) filtrante est formée d'environ 70% à 90% de fibres (7) de verre au borosilicate, de 3% à 20% de fibres (13) fusibles en matière plastique, de 3% à 20% d'additifs (15) à la manière de liants, comme de la résine d'acrylate, de la résine époxyde ou d'un élastomère polymérisant, et d'environ 5% à 30%de fibres (9) de carbone.

2. Matière filtrante suivant la revendication 1, **caractérisée en ce que** les fibres (7) de verre et/ou les fibres (9) de carbone se présentent dans le composite de manière chaotique ou sont structurées sous la forme d'une matrice ou d'un non-tissé.

3. Matière filtrante suivant l'une des revendications précédentes, **caractérisée en ce que** les fibres (13) fusibles en matière plastique sont en polyéthylène, en polyamide ou en polypropylène.

4. Matière filtrante suivant l'une des revendications précédentes, **caractérisée en ce que** la matière (1) filtrante est formée d'environ 80% de fibres (7) de verre au borosilicate, d'environ 5% de fibres (13) fusibles en matière plastique, d'environ 5% d'additifs (15) et d'environ 10% de fibres (9) de carbone.

5. Matière filtrante suivant l'une des revendications précédentes, **caractérisée en ce que** la matière (1) filtrante est en contact, suivant une surface, avec au moins une autre couche (17) fonctionnelle d'un filtre (3).

6. Matière filtrante suivant la revendication 5, **caractérisée en ce que** la couche (17) fonctionnelle est un grillage (19, 28) d'appui.

7. Elément de filtre, **caractérisé en ce qu'**il comporte une matière (1) filtrante suivant l'une des revendications précédentes.

8. Elément de filtre suivant la revendication 7, **caractérisée en ce que** l'élément (29) de filtre a au moins la succession suivant de couches (5) individuelles :
- grillage (19) d'appui
- matière (21) de non-tissé
- matière (23) fibreuse à grands pores
- matière (25) fibreuse à pores fins
- matière (27) de non-tissé
- grillage (28) d'appui.
